# EUROPÄISCHE PATENTSCHRIFT

(11) **EP 3 394 469 B1**
(45) Veröffentlichungstag und Bekanntmachung des Hinweises auf die Patenterteilung: **15.04.2020**
(21) Anmeldenummer: 16793907.3
(22) Anmeldetag: 10.11.2016
(51) Int. Cl.: F16D 65/12

(54) **INNENBELÜFTETE BREMSSCHEIBE**
INTERNALLY VENTILATED BRAKE DISC
DISQUE DE FREIN À VENTILATION INTÉRIEURE

(30) Priorität: 22.12.2015 DE 102015226450
(43) Veröffentlichungstag der Anmeldung: 31.10.2018
(73) Patentinhaber: Bayerische Motoren Werke Aktiengesellschaft, 80809 München (DE)
(72) Erfinder: HOFSTETTER, Josef, 85395 Wimpasing (DE); KOKOTT, Kordian, 85435 Erding (DE); SCHULZ, Ulf, 13158 Berlin (DE)
(86) Internationale Anmeldenummer: PCT/EP2016/077236
(87) Internationale Veröffentlichungsnummer: WO 2017/108258

(56) Entgegenhaltungen:
- WO-A1-2015/022126
- DE-A1-102011 084 946
- DE-A1-102013 225 538
- GB-A- 142 468

## Beschreibung

Die bei einem Bremsvorgang an den Reibelementen einer Radbremse auftretende Reibungswärme muss zur Aufrechterhaltung der Bremswirkung und zur Vermeidung von Beschädigungen der Radbremse nach außen an die Umgebung abgeführt werden. Ansonsten kann es bei wiederholten Bremsvorgängen mit hoher Bremskraft zu einem Nachlassen der Bremswirkung, dem sogenannten Bremsen-Fading kommen. Dies ist, insbesondere bei Fahrten mit hohen Geschwindigkeiten, sowie auf längeren Gefällestrecken, unerwünscht.

Es besteht auch ein großes Interesse daran, eine Überhitzung der Reibelemente der Bremse, insbesondere der Bremsscheiben und Bremsbeläge zu verhindern. In diesem Zusammenhang ist es allgemein bekannt, die Reibelemente einer Radbremse zusätzlich zu kühlen, indem beispielsweise Fahrtwind an die Reibelemente geleitet wird.

Zur besseren Wärmeabfuhr werden innenbelüftete Bremsscheiben mit radialen Kühlkanälen bzw. Stegen versehen, die zwischen beiden Reibflächen liegen. So entsteht bei sich drehender Bremsscheibe eine Zentrifugalkraft, die einen ständigen Luftzug von der Nabe durch die radialen Kühlöffnungen nach außen bewirkt. Dies begünstigt die Wärmeabfuhr. Trotz der höheren Baubreite und des höheren Gewichts hat sich diese Bremsscheibenbauweise für viele PKW durchgesetzt. Dabei gilt generell, je länger die radial angeordneten Stege sind, desto größer ist die Förderlänge des Luftstroms und desto besser ist auch die Kühlung.

Des Weiteren kann die Frequenz der Schwingungen bzw. der Biegung durch eine entsprechende Anordnung und Gestaltung der Stege gezielt verändert werden. Wird folglich die Schubsteifigkeit der Stege verändert, so ändert sich auch die Frequenzlage der Schwingungen und dementsprechend auch der jeweilige entstehende Geräuschpegel.

Um eine niedrigere Frequenz, also eine weichere Steggestaltung zu bewirken, sollten die Stege in Radialrichtung kürzer sein. Um eine höhere Frequenz zu erreichen, werden die Stege verdickt und somit eine höhere Steifigkeit erreicht.

Die DE 10 2011 084 946 A1 beschreibt eine Bremsscheibe eines Kraftfahrzeuges, in welcher Kühlkanäle integriert sind, um die Bremsscheibe durch darin einströmende Luft zu kühlen. Dabei erstrecken sich die dazu notwenigen Stege radial von dem inneren zu dem äußeren Bereich der Reibscheiben. Außerdem sind abwechselnd kürzere und längere Stege angeordnet. Zusätzlich wird eine Bremsscheibe beschrieben, die eine Verbindung zwischen Bremsscheibentopf und Reibring besitzt, durch die beim Bremsen möglichst wenig Spannungen in der Bremsscheibe aufgebaut werden.

Der nächstliegende Stand der Technik, die DE10 2013 225 538 A1, beschreibt eine innenbelüftete Bremsscheibe für eine Scheibenbremse, mit zwei benachbart zueinander angeordneten Reibscheiben, die durch radial verlaufende, regelmäßig angeordnete Stege, miteinander verbunden sind, wobei die Stege von einem Außenumfangsrand bis zu einem Innenumfangrand der Reibscheiben verlaufen und diese so durch die Stege verbunden sind, dass deren Zwischenräume mit Kühlluft durchströmbare, gleich große Kühlkanäle ausbilden, die durch weitere, kürzere Stege so unterteilt sind, dass sich in einem radialen Bereich, nahe am Innenumfangrand der Reibscheiben, mittig zwischen den Stegen, wenigstens ein kürzerer Steg befindet, wobei sich die Kühlkanäle, in radialer Richtung vom kürzeren Steg nach außen gerichtet, in wenigstens drei Strömungskanäle aufteilen, indem in jedem Kühlkanal, in Umfangsrichtung zu jedem kürzeren Steg radial nach außen versetzt, zwei erste weitere kürzere Stege angeordnet sind.

Ausgehend von diesem Stand der Technik ist es Aufgabe der vorliegenden Erfindung, eine innenbelüftete Bremsscheibe aus Reibring und Bremsscheibentopf zu schaffen, welche im Hinblick auf Erhitzung und Kühlung eine verbesserte Lösung ist.

Die Aufgabe wird durch die Merkmale des ersten Anspruchs gelöst. Weitere Ausbildungen der Erfindung beschreiben die abhängigen Ansprüche.

Nach der Erfindung ist eine innenbelüftete Bremsscheibe für eine Scheibenbremse, mit zwei benachbart zueinander angeordneten Reibscheiben, die durch radial verlaufende, regelmäßig angeordnete Stege, miteinander verbunden sind, wobei die Stege von einem Außenumfangsrand bis zu einem Innenumfangrand der Reibscheiben verlaufen und diese so durch die Stege verbunden sind, dass deren Zwischenräume mit Kühlluft durchströmbare, gleich große Kühlkanäle ausbilden, die durch weitere, kürzere Stege so unterteilt sind, dass sich in einem radialen Bereich näher am Innenumfangrand der Reibscheiben, mittig zwischen den Stegen wenigstens ein kürzerer Steg befindet, wobei sich die Kühlkanäle, in radialer Richtung vom kürzeren Steg nach außen gerichtet, in wenigstens drei Strömungskanäle aufteilen, indem in jedem Kühlkanal, in Umfangsrichtung zu jedem kürzeren Steg radial nach außen versetzt, zwei erste weitere kürzere Stege angeordnet sind, dadurch gekennzeichnet, dass von jedem der kürzeren Stege ausgehend, radial nach innen gerichtet, die zu einem Bremsscheibentopf hin gerichtete Reibscheibe verlängert und auf Höhe eines Kragens des Bremsscheibentopfes mit einer Bohrung in axialer Richtung versehen ist, die der Aufnahme eines Niets dient, der die Reibscheibe an dem Bremsscheibentopf befestigt.

Eine solche Anordnung und Gestaltung von Kühlkanälen zwischen den Reibscheiben ergibt eine große Rippendichte. Je größer diese ist, desto größer ist auch die Kühlfläche und desto besser können auftretende Temperaturspitzen ausgeglichen werden, was zu einer optimierten Kühlung der Bremsscheibe führt. Die Kühlkanalanordnung, welche die Oberfläche zur Kühlung der Bremsscheibe vergrößert erhöht damit vorteilhafterweise die Kühlleistung. Die vorgeschlagene Anbindung der Reibscheibe an den Bremsscheibentopf mittels Nieten in axialer Richtung über eine Reibscheibe hat den Vorteil, dass sich miteinander verbundene Bremsscheibenbauteile, aus unter Hitzeeinwirkung sich unterschiedlich ausdehnenden Werkstoffen, wie bei Bremsscheibe und Bremsscheibentopf in fester Verbindung, möglichst wenig beeinflussen.

In einer weiteren vorteilhaften Ausführungsform der Erfindung besitzt die mit der Bohrung zur Aufnahme des Niets in der Reibscheibe korrespondierende Bohrung zur Aufnahme des Niets im Kragen des Bremsscheibentopfs an ihrem von der Reibscheibe weg gerichteten Ende eine plane Einsenkung zur wenigstens teilweisen Aufnahme eines Setzkopfs des Niets. Das hat den Vorteil, dass Setzkopf und Bremsscheibentopfkragen eine im Wesentlichen plane Fläche bilden und so ein Anhaften von Schmutz und Bremsbelagabrieb vermindert werden kann.

Eine vorteilhafte Ausführungsform der Erfindung sieht vor, dass die radialen Abstände der kürzeren Stege zu den zwei ersten weiteren kürzeren Stegen innerhalb der Kühlkanäle ein stegfreies Kreisringband mit dem Kreismittelpunkt in der Mitte der Bremsscheibe ergeben, das ausschließlich durch Stege unterbrochen ist. Vorteilhafterweise kann dadurch sehr günstig eine Ablösung der Strömung auf der Leeseite der Stege reduziert und damit die Oberflächenausnutzung der Luftströmung erhöht werden. Von Vorteil ist weiterhin, wenn die radial äußeren Enden von Stegen auf demselben Kreisumfang in der Nähe des Außenumfangrands der Bremsscheibe liegen. Dies trifft auch auf die radial inneren Enden von Stegen zu, die vorteilhafterweise auf demselben Kreisumfang in der Nähe des Innenumfangrands der Bremsscheibe liegen.

Weitere bevorzugte Ausführungsformen der Erfindung sind dadurch gekennzeichnet, dass die zum Bremsscheibentopf hin gerichtete Reibscheibe eine axial gerichtete Einsenkung zur Auflage des Kragens des Bremsscheibentopfs besitzt. Wenn dann der Innendurchmesser der Einsenkung größer ist als ein Außendurchmesser des Kragens, so dass die Reibscheibe zum Bremsscheibentopf ausschließlich mittels der Nieten zentriert ist, hat das den Vorteil, dass bei best möglich bearbeitbarer Auflage des Bremsscheibentopfs auf der Reibscheibe eine zentrierende Nietverbindung zwischen den beiden Teilen bereitgestellt werden kann, die einerseits eine Übertragung hoher Bremskräfte ermöglicht und andererseits bezüglich der Wärmeübertragung von Reibscheibe auf Bremsscheibentopf eine bestmögliche Isolationswirkung bei gleichzeitig großer Verzugsfreiheit bewirkt. Zusätzlich ist von Vorteil, wenn die Einsenkung den Kragen des Bremsscheibentopfs vollständig aufnimmt und/oder wenn die plane Einsenkung des Kragens des Bremsscheibentopfs den Setzkopf des Niets vollständig aufnimmt.

Vorteilhafterweise kann so die Fortsetzung der Reibscheibenfläche nach innen, hin bis zum Bremsscheibentopfmantel im Wesentlichen eben gestaltet werden, was eine Ansetzten von Schmutz und ein Eindringen von Wasser in die Verbindung von Bremsscheibentopf und Reibscheibe erschwert.

Ein bevorzugtes Ausführungsbeispiel der vorliegenden Erfindung einer Bremsscheibe ist in der beigefügten Zeichnung dargestellt. Erfindungswesentlich können sämtliche näher beschriebenen Merkmale sein. Es zeigen:
- Fig.1: eine erfindungsgemäße Bremsscheibe in räumlicher Darstellung mit Blick auf den Bremsscheibentopf,
- Fig.2: die Bremsscheibe nach Figur 1 in einem vergrößerten Teilschnitt (die Schnittebene enthält die Drehachse), gegenüber Figur 1 um eine in der Zeicheneben liegende Vertikalachse gedreht, im Bereich der Befestigungsstelle der Reibscheibe am Bremsscheibentopf,
- Fig.3: eine noch weiter vergrößerte und um 180 Winkel-Grad gedrehte Teilansicht eines Niets aus Fig.2,
- Fig.4: eine Aufsicht auf die Topf-Seite der Bremsscheibe, sowie
- Fig.5: eine Teil-Aufsicht auf die gegenüber Fig. 4 um 180 Winkel-Grad gedrehte Rückseite der Bremsscheibe, mit einer Darstellung der Verbindung beider Reibscheiben über Stege, mittels einer Bruchdarstellung eines Teils der Reibscheibe.

Die in den Figuren dargestellte Bremsscheibe 1 besteht aus einem Bremsscheibentopf 3 und einem Reibring 2 und ist für eine Montage an einer nicht gezeigten Radnabe vorgesehen, um mit dieser im Betrieb um die Drehachse D zu rotieren. Der einstückige innengekühlte und in Grauguss gefertigte Reibring 2 besteht aus zwei Reibscheiben 2', 2" mit dazwischen liegenden und diese miteinander verbindenden Stegen 2''' einer Kühlluftführung. Die in Axialrichtung, d.h. in Richtung der Drehachse D betrachtet näher am Bremsscheibentopf 3 liegende ringförmige Reibscheibe 2' erstreckt sich in Radialrichtung R (bezüglich der Drehachse D) betrachtet mit einem sog. Befestigungsfortsatz 9 um ein gewisses Maß weiter zur Drehachse D hin als die andere in Axialrichtung weiter vom Bremsscheibentopf 3 entfernte Reibscheibe 2".

Im Überlappungsbereich zwischen dem genannten Befestigungsfortsatz 9 der Reibscheibe 2' und einem vom freien Ende des bezüglich der Drehachse D kreiszylindrischen Mantels 3a des Bremsscheibentopfes 3 in Radialrichtung R nach außen abstehenden Kragens 3b ist der Bremsscheibentopf 3 über sich in Axialrichtung erstreckende Nieten 5 mit der Reibscheibe 2' und somit mit dem Reibring 2 verbunden. In diesem Sinne wird vorliegend (und insbesondere in der Beschreibungseinleitung) von einer Verbindung zwischen dem Bremsscheibentopf 3 und dem Reibring 2 gesprochen.

In den Mantel 3a des Bremsscheibentopfes 3 sowie in geringem Umfang auch in den Boden 3c des Bremsscheibentopfes 3 sind gleichmäßig über dem Umfang des Bremsscheibentopfes 3 verteilt Aussparungen 7 eingebracht, in welche die Nieten 5 hineinragen, d.h. in denen die Nieten 5 zumindest anteilig platziert sind. Jede dieser Aussparungen 7, welche auch Abschnitte 7 mit reduzierter Wandstärke bilden, erstreckt sich in Axialrichtung, um den jeweils zugehörigen ebenso orientierten Niet 5 und dient zu seiner teiweisen Aufnahme bzw. zum Setzen des Niets 5 bei der Montage d.h. der Verbindung von Bremsscheibentopf 3 mit Reibring 2, wie ersichtlich in Axialrichtung. Dabei besitzen die Aussparungen 7 im Wesentlichen die Form eines Halbkreis-Zylinders und werden in den Mantel 3a des Bremsscheibentopfes 3 beim Gießen oder Schmieden eingeformt, so dass dieser Mantel 3a im Bereich der Aussparungen 7 zwar geschwächt ist, jedoch innen, d.h. von der Drehachse D aus betrachtet noch eine geschlossene Wand bildet. Selbstverständlich sind auch im Kragen 3b des Bremsscheibentopfs 3 Durchbrüche in Form von Bohrungen quasi als Fortsetzung zu den Aussparungen 7 vorgesehen, durch welche die Nieten 5 hindurch gesteckt sind. So können aufgrund dieser Aussparungen 7 die Nieten 5 näher zur Drehachse D hin angeordnet sein.

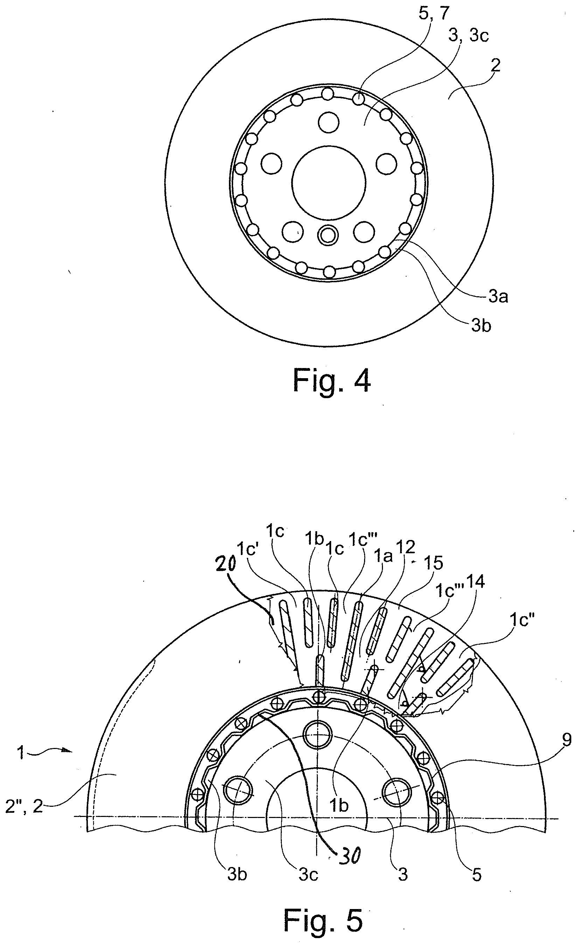

Die Figur 5 zeigt auf der Innenseite der Reibscheibe 2' der Bremsscheibe 1 eine sich in Umfangsrichtung über deren Kreisringfläche geometrisch regelmäßig wiederholende Stegkombination aus Stegen 1a und kürzeren Stegen 1b, 1c der innenbelüfteten Bremsscheibe 1. Die Reibscheiben 2', 2" des Reibrings 2 sind miteinander über die Stege 1a und die kürzeren Stege 1b, 1c verbunden, wobei die Stege 1a gleichzeitig Kühlkanäle 20 begrenzen, die sich in Umfangsrichtung über die Kreisringflächen der Reibscheiben 2', 2" ebenfalls geometrisch regelmäßig wiederholen. Die Kühlkanäle 20 erstrecken sich jeweils von einem Innenumfangsrand 14 der Reibscheiben 2', 2", am Beginn der Stege 1a bis zu einem Außenumfangsrand 15 der Reibscheiben 2', 2" der Bremsscheibe 1.

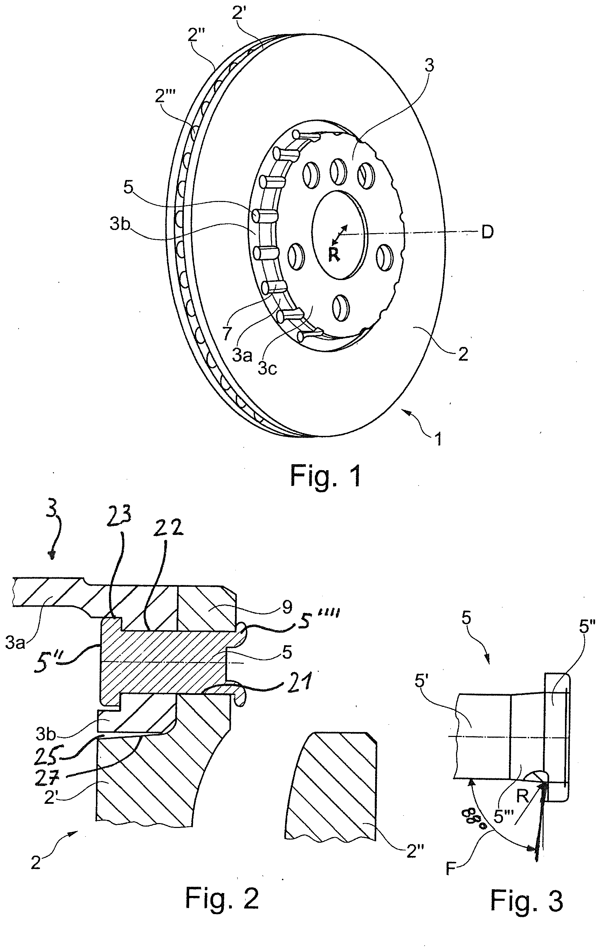

In Umfangsrichtung, mittig in jedem Kühlkanal 20 zwischen den jeweils gleich langen Stegen 1a innerhalb der Reibscheiben 2', 2" erstreckt sich jeweils der kurze Steg 1b von nahe des Innenumfangsrands 14 der Reibscheiben 2', 2" in Richtung deren Außenumfangsrand 15 bis zu einem ersten Durchmesser 12 der Reibscheiben 2', 2". Von diesem ausgehend, erstrecken sich radial weiter nach außen bis zum Außenumfangsrand 15 hin, zwei innerhalb des Kühlkanals 20 in Umfangsrichtung zum kurzen Steg 1b versetzte, erste weitere kurze Stege 1c, einer nach links, der andere nach rechts versetzt. Die ersten weiteren kurzen Stege 1c teilen die Kühlkanäle 20, in radialer Richtung vom kürzeren Steg 1b nach außen gerichtet, in drei Strömungskanäle 1c', 1c", 1c''' auf. Alle Stege 1a, 1b, 1c weisen im Wesentlichen eine einheitliche Stegbreite auf und sind vorne und hinten abgerundet. Dabei liegen die radial äußeren Enden der jeweiligen Stege 1a, 1c auf demselben Kreisumfang in der Nähe des Außenumfangrands 15 und die radial inneren Enden der jeweiligen Stege 1a auf demselben Kreisumfang in der Nähe des Innenumfangrands 14 der Bremsscheibe 1. Außerdem ist, von jedem der kürzeren Stege 1b ausgehend, die zu dem Bremsscheibentopf 3 hin gerichtete Reibscheibe 2' radial nach innen gerichtet verlängert und auf Höhe des Kragens 3b des Bremsscheibentopfes 3 mit einer Bohrung 21 in axialer Richtung versehen, die der Aufnahme des Niets 5 dient, der die Reibscheibe 2' an dem Bremsscheibentopf 3 befestigt. Schließköpfe 5'''' aller Nieten 5 befinden sich an der sichtbaren Seite des Befestigungsfortsatzes 9 der Reibscheibe 2', während sich die Setzköpfe 5" der Nieten 5 vollständig versenkt in einer planen Einsenkung 23 des Kragens 3b des Bremsscheibentopfs 3 befinden, wie in Figur 2 dargestellt ist. Die zum Bremsscheibentopf 3 hin gerichtete Reibscheibe 2' besitzt ebenfalls eine axial gerichtete Einsenkung 27 zur Auflage des Kragens 3b des Bremsscheibentopfs 3, deren Innendurchmesser größer ist als ein Außendurchmesser des Kragens 3b, so dass die Reibscheibe 2' und der Bremsscheibentopf 3 aufgrund eines Radialspiels 25 zueinander ausschließlich mittels der Nieten 5 zentriert sind.

Figur 3 zeigt eine Teilansicht eines Niets 5 ausgebildet als Halbhohlniet 5mm x 13mm mit Setzkopf 5" und Nietschaft 5'. Zum Setzkopf 5" hin ist der Nietschaft 5' konisch mit zunehmendem Durchmesser ausgebildet. Der Setzkopf 5" besitzt zum Nietschaft 5' hin gerichtet einen Freistich, so dass der mit einem Doppelpfeil F bezeichnete Winkel im Wesentlichen 88 Winkelgrad misst. Ein Betrag eines Radius R zwischen Konus 5''' des Nietschafts 5' und Freistich des Setzkopfs 5" ist nicht festgelegt und ergibt sich durch die Fertigung. Der Konus 5''' besitzt eine Länge von wenigstens 1,5mm und höchstens 4mm, wobei der Durchmesser des Konus 5''' am Setzkopf 5" 5,33mm beträgt. Versuche haben ergeben, dass diese Nietgeometrie bei einer Nietselbstzentrierung während des Setzens des Niets 5 ein vorteilhaftes Tragbild mit 100% Traganteil, was eine optimale Zentrierung und Kraftübertragung ergibt. Zusätzlich bewirken der konische Nietschaft 5' und der Freistich F des Setzkopfs 5" eine perfekte Abdichtung der Nietverbindung und so Schutz gegen korrosive Medien.

## Patentansprüche

1. Innenbelüftete Bremsscheibe (1) für eine Scheibenbremse, mit zwei benachbart zueinander angeordneten Reibscheiben (2',2"), die durch radial verlaufende, regelmäßig angeordnete Stege (1a), miteinander verbunden sind, wobei die Stege (1a) von einem Außenumfangsrand (15) bis zu einem Innenumfangrand (14) der Reibscheiben (2',2") verlaufen und diese so durch die Stege (1a) verbunden sind, dass deren Zwischenräume mit Kühlluft durchströmbare, gleich große Kühlkanäle (20) ausbilden, die durch weitere, kürzere Stege (1b, 1c) so unterteilt sind, dass sich in einem radialen Bereich näher am Innenumfangrand (14) der Reibscheiben (2',2") mittig zwischen den Stegen (1a) wenigstens ein kürzerer Steg (1b) befindet, wobei sich die Kühlkanäle (20), in radialer Richtung vom kürzeren Steg (1b) nach außen gerichtet, in wenigstens drei Strömungskanäle (1c', 1c", 1c''') aufteilen, indem in jedem Kühlkanal (20), in Umfangsrichtung zu jedem kürzeren Steg (1b) radial nach außen versetzt, zwei erste weitere kürzere Stege (1c) angeordnet sind, **dadurch gekennzeichnet, dass** von jedem der kürzeren Stege (1b) ausgehend, radial nach innen gerichtet, die zu einem Bremsscheibentopf (3) hin gerichtete Reibscheibe (2') verlängert und auf Höhe eines Kragens (3b) des Bremsscheibentopfes (3) mit einer Bohrung (21) in axialer Richtung versehen ist, die der Aufnahme eines Niets (5) dient, der die Reibscheibe (2') an dem Bremsscheibentopf (3) befestigt.

2. Innenbelüftete Bremsscheibe (1) nach Anspruch 1, **dadurch gekennzeichnet, dass** eine zur Bohrung (21) zur Aufnahme des Niets (5) korrespondierende Bohrung (22) zur Aufnahme des Niets (5) im Kragen (3b) des Bremsscheibentopfs (3) an ihrem von der Reibscheibe (2') weg gerichteten Ende eine plane Einsenkung (23) besitzt, zur wenigstens teilweisen Aufnahme eines Setzkopfs (5") des Niets (5).

3. Innenbelüftete Bremsscheibe (1) nach Anspruch 1 oder 2, **dadurch gekennzeichnet, dass** die radialen Abstände der kürzeren Stege (1b) zu den zwei ersten weiteren kürzeren Stegen (1c) innerhalb der Kühlkanäle (20) ein von kürzeren Stegen (1b, 1c) freies Kreisringband (12) mit einem Kreismittelpunkt in der Mitte der Bremsscheibe (1) ergeben, das ausschließlich durch die Stege (1a) unterbrochen ist.

4. Innenbelüftete Bremsscheibe (1) nach einem der Ansprüche 1 bis 3, **dadurch gekennzeichnet, dass** die zum Bremsscheibentopf (3) hin gerichtete Reibscheibe (2') eine axial gerichtete Einsenkung (27) zur Auflage des Kragens (3b) des Bremsscheibentopfs (3) besitzt.

5. Innenbelüftete Bremsscheibe (1) nach Anspruch 4, **dadurch gekennzeichnet, dass** der Innendurchmesser der Einsenkung (27) größer ist als ein Außendurchmesser des Kragens (3b), so dass die Reibscheibe (2') zum Bremsscheibentopf (3) ausschließlich mittels der Nieten (5) zueinander zentriert sind.

6. Innenbelüftete Bremsscheibe (1) nach einem der Ansprüche 4 oder 5, **dadurch gekennzeichnet, dass** die Einsenkung (27) den Kragen (3b) des Bremsscheibentopfs (3) vollständig aufnimmt.

7. Innenbelüftete Bremsscheibe (1) nach einem der Ansprüche 1 bis 6, **dadurch gekennzeichnet, dass** die plane Einsenkung (23) des Kragens (3b) des Bremsscheibentopfs (3) den Setzkopf (5") des Niets (5) vollständig aufnimmt.

## Claims

1. An internally ventilated brake disc (1) for a disc brake, with two friction discs (2', 2") arranged adjacent to each other, which are connected together by radially running, regularly arranged lands (1a), wherein the lands (1a) run from an outer peripheral edge (15) up to an inner peripheral edge (14) of the friction discs (2', 2") and these are connected by the lands (1a) in such a way that the gaps between them form cooling channels (20) of the same size through which cooling air can flow, which are subdivided by further, shorter lands (1b, 1c) such that at least one shorter land (1b) is located in a radial region closer to the inner peripheral edge (14) of the friction discs (2', 2") centrally between the lands (1a), wherein the cooling channels (20), directed in the radial direction from the shorter land (1b) outwards, divide up into at least three flow channels (1c', 1c", 1c'''), in that two first further shorter lands (1c) are arranged in each cooling channel (20), offset radially outwards in the peripheral direction relative to each shorter land (1b), **characterised in that**, starting from each of the shorter lands (1b), directed radially inwards, the friction disc (2') which is directed towards a brake disc chamber (3) is extended and level with a collar (3b) of the brake disc chamber (3) is provided with a bore (21) in the axial direction which serves to accommodate a rivet (5) which fastens the friction disc (2') to the brake disc chamber (3).

2. An internally ventilated brake disc (1) according to Claim 1, **characterised in that** a bore (22) for accommodating the rivet (5), corresponding to the bore (21) for accommodating the rivet (5), in the collar (3b) of the brake disc chamber (3) has on its end directed away from the friction disc (2') a planar depression (23), for at least partially accommodating a set head (5") of the rivet (5).

3. An internally ventilated brake disc (1) according to Claim 1 or Claim 2, **characterised in that** the radial distances of the shorter lands (1b) from the two first further shorter lands (1c) within the cooling channels (20) give rise to a circular-ring band (12) which is free from shorter lands (1b, 1c), with a centre of the circle in the centre of the brake disc (1), which is interrupted exclusively by the lands (1a).

4. An internally ventilated brake disc (1) according to one of Claims 1 to 3, **characterised in that** the friction disc (2') which is directed towards the brake disc chamber (3) has an axially directed depression (27) for supporting the collar (3b) of the brake disc chamber (3).

5. An internally ventilated brake disc (1) according to Claim 4, **characterised in that** the internal diameter of the depression (27) is greater than an external diameter of the collar (3b), so that the friction disc (2') and brake disc chamber (3) are centred relative to each other exclusively by means of the rivets (5).

6. An internally ventilated brake disc (1) according to one of Claims 4 or 5, **characterised in that** the depression (27) completely accommodates the collar (3b) of the brake disc chamber (3).

7. An internally ventilated brake disc (1) according to one of Claims 1 to 6, **characterised in that** the planar depression (23) of the collar (3b) of the brake disc chamber (3) completely accommodates the set head (5") of the rivet (5).

## Revendications

1. Disque de frein (1) à ventilation interne destiné à un frein à disques comprenant deux disques de friction (2', 2"), installés côte à côte qui sont reliés par des barrettes (1a) installées régulièrement et s'étendant radialement, les barrettes (1a) s'étendant du bord périphérique externe (15) au bord périphérique interne (14) des disques de friction (2', 2"), et ceux-ci étant reliés par les barrettes (1a) de sorte que leur volume intermédiaire forme des canaux de refroidissement (20) de même dimension dans lesquels peut circuler de l'air de refroidissement qui sont subdivisés par d'autres barrettes (1b, le) plus courtes de sorte que, dans une zone radiale plus proche de la périphérie interne (14) des disques de friction (2', 2") au moins une barrette plus courte (1b) soit située dans une position médiane entre les barrettes (1a), les canaux de refroidissement (20) se subdivisant, en au moins trois canaux de circulation (1c', 1c", 1c''') dirigés dans la direction radiale, de la barrette plus courte (1b) vers l'extérieur du fait que, dans chaque canal de refroidissement (20), sont installées deux premières autres barrettes plus courtes (1c) décalées radialement vers l'extérieur dans la direction périphérique par rapport à chaque barrette plus courte (1b),
**caractérisé en ce que**
le disque de friction (2') orienté vers un pot de disque de frein (3) se prolonge radialement vers l'intérieur à partir de chacune des barrettes plus courtes (1b), et est équipé à la hauteur d'une collerette (3b) du pot de disque de frein (3) en direction axiale d'un perçage (21) qui sert à la réception d'un rivet (5) qui fixe le disque de friction (2') sur le pot de disque de frein (3).

2. Disque de frein à ventilation interne (1) conforme à la revendication 1,
**caractérisé en ce qu'**
un perçage (22) de réception du rivet (5) correspondant au perçage (21) de réception du rivet (5), situé dans la collerette (3b) du pot de disque de frein (3) comporte, à son extrémité opposée au disque de friction (2') un renfoncement plan (23) permettant de recevoir au moins partiellement la tête d'appui (5") du rivet (5).

3. Disque de frein à ventilation interne (1) conforme à la revendication 1 ou 2,
**caractérisé en ce que**
les distances radiales entre les barrettes plus courtes (1b) et les deux premières autres barrettes plus courtes (1c) permettent d'obtenir à la partie interne des canaux de refroidissement (20) une bande annulaire circulaire (12) exempte de barrettes plus courtes (1b, 1c) dont le centre est situé au milieu du disque de frein (1), qui est uniquement interrompue par les barrettes (1a).

4. Disque de frein à ventilation interne (1) conforme l'une des revendications 1 à 3,
**caractérisé en ce que**
le disque de friction (2') orienté vers le pot de disque de frein (3) comporte un renfoncement (27) dirigé axialement permettant le positionnement de la collerette (3b) du pot de disque de frein (3).

5. Disque de frein à ventilation interne (1) conforme à la revendication 4,
**caractérisé en ce que**
le diamètre interne du renfoncement (27) est supérieur au diamètre externe de la collerette (3b) de sorte que les disques de friction (2') soient centrés par rapport au pot de disque de frein (3) exclusivement au moins des rivets (5).

6. Disque de frein à ventilation interne (1) conforme à l'une des revendications 4 et 5,
**caractérisé en ce que**
le renfoncement (27) reçoit en totalité la collerette (3b) du pot de disque de frein (3).

7. Disque de frein à ventilation interne (1) conforme à l'une des revendications 1 à 6,
**caractérisé en ce que**
le renfoncement plan (23) de la collerette (3b) du pot de disque de frein (3) reçoit en totalité la tête (5") du rivet (5).
